(19) Europäisches Patentamt
European Patent Office
Office européen des brevets

(11) EP 2 072 556 A1

(12) **EUROPÄISCHE PATENTANMELDUNG**

(43) Veröffentlichungstag:
**24.06.2009 Patentblatt 2009/26**

(51) Int Cl.:
***C08G 18/69*** (2006.01) ***C08G 18/58*** (2006.01)
***C08C 19/36*** (2006.01) ***C09J 175/04*** (2006.01)

(21) Anmeldenummer: **07150049.0**

(22) Anmeldetag: **17.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Sika Technology AG**
**6340 Baar (CH)**

(72) Erfinder:
- **Kramer, Andreas**
**8006, Zürich (CH)**
- **Finter, Jürgen**
**8037, Zürich (CH)**

(74) Vertreter: **Sika Patent Attorneys**
**c/o Sika Technology AG**
**Geschäftsstelle Zürich**
**Tüffenwies 16**
**Postfach**
**8048 Zürich (CH)**

# (54) Verfahren zur Herstellung von hydroxyfunktionellen Polymeren, die hieraus gewinnbaren Isocyanatgruppen-endständigen Polyadditionsprodukte sowie deren Verwendung

(57) Die Erfindung betrifft ein Verfahren zur Herstellung von Polyurethanen, basierend auf der Umsetzung eines Hydroxylgruppen-aufweisenden Polymers und eines Polyisocyanats. Die vorliegende Erfindung betrifft weiterhin ein nach diesem Verfahren hergestelltes Isocyanatgruppen-endständiges Polyadditionsprodukt, einen Klebstoff, der ein solches Isocyanatgruppen-endständiges Polyadditionsprodukt enthält sowie die Verwendung des Polyadditionsproduktes als Härterkomponente in Klebstoffen. Die erfindungsgemässen Polyurethane werden durch Umsetzen mindestens eines Polymers (A), welches mindestens zwei Hydroxylgruppen aufweist und welches durch die Umsetzung eines Polymers mit mindestens zwei Carboxyl- und/oder Phenol-Gruppen mit mindestens einer Verbindung mit mindestens einer Glycidylgruppe erhalten wird, mit mindestens einem Polyisocyanat (B) gewonnen.

EP 2 072 556 A1

## Beschreibung

### Technisches Gebiet

Die Erfindung betrifft ein Verfahren zur Herstellung von Polyurethanen, basierend auf der Umsetzung eines Hydroxylgruppen-aufweisenden Polymers und eines Polyisocyanats. Die vorliegende Erfindung betrifft weiterhin ein nach diesem Verfahren hergestelltes Isocyanatgruppen-endständiges Polyadditionsprodukt, einen Klebstoff, der ein solches Isocyanatgruppen-endständiges Polyadditionsprodukt enthält sowie die Verwendung des Polyadditionsproduktes als Härterkomponente in Klebstoffen.

### Stand der Technik

Polyurethane (PU, DIN-Kurzzeichen: PUR) sind Kunststoffe oder Kunstharze, welche aus der Polyadditionsreaktion von Diolen, beziehungsweise Polyolen, mit Polyisocyanaten entstehen.

Polyurethane können je nach Wahl des Isocyanats und des Polyols unterschiedliche Eigenschaften aufweisen. Im Wesentlichen werden die späteren Eigenschaften durch die Polyolkomponente bestimmt, weil oftmals zum Erreichen gewünschter Eigenschaften nicht die Isocyanatkomponente angepasst (also chemisch verändert) wird, sondern die Polyolkomponente.

Aus PU werden zahlreiche Produkte hergestellt, wie z.B. Dichtungen, Schläuche, Fussböden, Lacken, und insbesondere auch Klebstoffe.

In der Technik finden darüber hinaus seit langem spezielle Copolymere Anwendung, welche als sogenannte Flüssigkautschuke bezeichnet werden. Durch die Verwendung von chemisch reaktiven Gruppen, wie Epoxid-, Carboxyl-Vinyl- oder Aminogruppen sind derartige Flüssigkautschuke chemisch in die Matrix einbaubar. So existieren beispielsweise seit langem reaktive Flüssigkautschuke aus Butadien/Acrylonitril-Copolymere, welche mit Epoxid-, Carboxyl-, Vinyl- oder Aminogruppen terminiert sind und die von der Firma B.V. Goodrich, beziehungsweise Noveon, unter dem Handelsnamen Hycar® angeboten werden.

Als Ausgangsbasis wird hierfür stets das Carboxylgruppen terminierte Butadien/Acrylonitril-Copolymer (CTBN) verwendet, zu welchem üblicherweise ein starker Überschuss an einem Diamin, Diepoxid oder Glycidyl(meth)acrylat zugesetzt wird. Dies führt jedoch dazu, dass sich einerseits eine hohe Viskosität bildet oder andererseits, dass sich ein sehr hoher Gehalt an unumgesetztem Diamin, Diepoxid oder Glycidyl(meth)acrylat ergibt, welches entweder aufwändig entfernt werden muss oder aber die mechanischen Eigenschaften stark negativ beeinflusst.

Die Verwendung derartiger epoxid-, carboxyl-, amin-, oder vinylfunktioneller Butadien/Acrylontirilpolymere in Klebstoffen ist bereits bekannt.

Hydroxylfunktionelle Varianten hiervon, welche für die Polyurethanchemie interessanter sind als aminofunktionelle Produkte und als Polyole zur Umsetzung mit der Isocyanat-Komponente dienen, sind technisch anspruchsvoll und aufwändig herstellbar und werden meist durch Umsetzung von CTBN mit Ethylenoxid erhalten. Hierdurch entstehen primäre Alkohol-Endgruppen. Die so entstehenden Polyethylenglycolgruppen sind im Kontakt mit Wasser zudem nachteilig.

Beispielsweise offenbart US 4,444,692 die Herstellung hydroxylterminierter reaktiver Flüssigpolymere durch Umsetzen von Ethylenoxid in Gegenwart eines Amin-Katalysators mit einem carboxylterminierten reaktiven Flüssigpolymer. Hierbei ergeben sich, wie oben angesprochen, primäre Alkohol-Endgruppen im Polymer.

US 3,712,916 beschreibt ebenfalls hydroxylterminierte Polymere, die als Klebstoffe und Dichtmaterialien nützlich sind. Diese hydroxylterminierten Polymere werden durch Reaktion carboxylterminierter Polymere ebenfalls mit Ethylenoxiden in Gegenwart eines tertiären Amino-Katalysators hergestellt.

Weitere Wege zur Herstellung hydroxylfunktioneller Varianten sind die Umsetzung der endständigen Carbonsäuren mit Aminoalkoholen, bzw. niedermolekularen Diolen. In beiden Fällen muss mit grossen Überschüssen gearbeitet werden, was eine aufwändige Aufarbeitung nach sich zieht.

US 4,489,008 offenbart hydrolytisch stabile hydroxylterminierte Flüssigpolymere, die in der Herstellung von Polyurethanen von Nutzen sind. Diese werden durch Umsetzen von zumindest einem Aminoalkohol mit einem carboxylterminierten Polymer hergestellt. Die Umsetzung eines carboxylterminierten Polymers mit mindestens einer Verbindung, die mindestens eine Glycidylgruppe aufweist, ist nicht offenbart. Gegenüber den herkömmlichen Polyurethanen wird die verbesserte hydrolytische Stabilität des Endproduktes betont.

US 3,551,472 beschreibt hydroxylterminierte Polymere, die durch Reaktion carboxylterminierter Polymere mit einem $C_3$-$C_6$-Alkylen-Diol in Gegenwart eines sauren Katalysators hergestellt werden. Es ist angegeben, dass diese als Klebstoffe und Dichtmaterialien von Nutzen sind.

Desgleichen beschreibt US 3,699,153 hydroxylterminierte Polymere, die durch Reaktion carboxylterminierter Polymere mit einem $C_3$-$C_6$-Alkylen-Diol hergestellt werden.

## Darstellung der Erfindung

Der vorliegenden Erfindung liegt die Aufgabe zugrunde, verbesserte Polyurethanzusammensetzungen, insbesondere Klebstoffe, Dichtstoffe und Primer bereitzustellen, die eine verbesserte Haftung auf unterschiedlichsten Untergründen aufweisen. Es ist eine weitere Aufgabe der vorliegenden Erfindung, Zähigkeitsverbesserer mit funktionellen Endgruppen zur Verfügung zu stellen, welche in der Lage sind, die im Stand der Technik genannten Probleme zu überwinden und insbesondere die technisch anspruchsvolle und aufwändige Umsetzung der Carboxylgruppen-terminierten Polymere mit Ethylenoxid zu umgehen.

Diese Aufgaben werden durch den Gegenstand der unabhängigen Ansprüche 1, 21, 23, 24 und 25 gelöst. Bevorzugte Ausführungsformen ergeben sich aus den Unteransprüchen.

Mit dem erfindungsgemässen Verfahren zur Herstellung von Polyurethanen ergibt sich ein alternativer und verbesserter Weg zur Umsetzung von Carboxyl- und/oder Phenolgruppen enthaltenden Polymeren zu hydroxylfunktionellen Varianten. Anstelle von Ethylenoxid, welches aus toxikologischen Gründen ein Gefahrenpotenzial besitzt (oder dem Einsatz von Diolen bzw. Aminoalkoholen) werden Verbindungen mit mindestens einer Glycidylgruppe verwendet, d.h. höhermolekulare Epoxide, durch deren Einsatz sekundäre Alkohole erhalten werden. Beispielsweise lassen sich durch die Verwendung von gut zugänglichem, gut handhabbaren und toxikologisch ungefährlichen Bisphenol-A-diglycidylether oder Kresyl-glycidylether auf einfache Weise aromatische Strukturen einführen, welche in den Polyurethanen zu einer deutlichen Steigerung der Mechanik führen können. Diese Umsetzungsprodukte weisen zudem hohe Hydrolysestabilität auf.

Die Erfindung findet ihren Vorteil neben der Vereinfachung und Verbesserung des Herstellungsverfahrens selbst insbesondere dadurch, dass die durch Umsetzung von carboxyl- und/oder phenolgruppenhaltigen Polymeren mit einer Verbindung mit mindestens einer Glycidylgruppe erhaltenen hydroxylfunktionellen Polymere durch Umsetzung mit Polyisocyanaten zu Polyurethanen ein Endprodukt ergeben, das gegenüber den herkömmlichen Produkten verbesserte Eigenschaften im Hinblick auf Haftung, Zähigkeitsmodifizierung und Hydrolysestabilität aufweist.

Wie bereits eingangs betont, finden die erfindungsgemäss hergestellten Polyurethane, bzw. die sich aus einer Umsetzung der oben genannten Polymere mit Polyisocyanat ergebenden Isocyanat-endständigen Polyadditionsprodukte, in Klebstoffen Anwendung. Insbesondere findet das hydroxylfunktionelle Polymer als Härterkomponente oder Teil einer Härterkomponente in Zwei-Komponenten-Klebstoffen Anwendung.

## Wege zur Ausführung der Erfindung

Gemäss einem ersten Aspekt betrifft die vorliegende Erfindung ein Verfahren zur Herstellung von Polyurethanen, umfassend die Schritte:

(a) Bereitstellen von mindestens einem Polymer (A), welches mindestens zwei Hydroxylgruppen aufweist und welches durch die Umsetzung eines Polymers mit mindestens zwei Carboxyl- und/oder Phenolgruppen mit mindestens einer Verbindung mit mindestens einer Glycidylgruppe erhalten wird;

(b) Umsetzen des mindestens einen Polymers (A) mit mindestens einem Polyisocyanat (B).

In einer ersten Ausführungsform können zur Herstellung von Polymeren (A) insbesondere Carboxylgruppen-terminierte Polymere der Formel (I) verwendet werden.

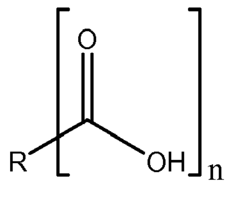

(I)

Hierbei steht R für einen n-wertigen Rest eines Carboxylgruppen-terminierten Polymeren nach Entfernung von n Carboxylgruppen und n für einen Wert von 2 bis 4.

Einerseits sind dies insbesondere Butadien-Acrylnitril-Copolymere, wie sie beispielsweise unter dem Namen Hycar® CTBN von Noveon kommerziell erhältlich sind.

Bevorzugt weist das Polymer der Formel (I) eine Struktur der Formel (Ia) auf.

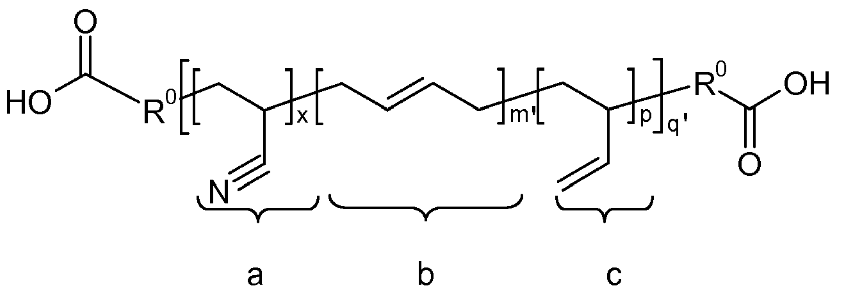

(Ia)

$R^0$ steht für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent $R^0$ einen Substituenten der Formel (VII) dar, wobei die gestrichelten Linien die Anbindungsstellen darstellen

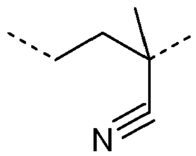

(VII)

Weiterhin steht der Index q' für einen Wert zwischen 40 und 100, insbesondere zwischen 50 und 90. Weiterhin stellen die Bezeichnungen b und c die Strukturelemente, welche von Butadien stammen und a das Strukturelement, welches von Acrylonitril stammt, dar. Die Indices x, m', und p stellen ihrerseits Werte dar, die das Verhältnis der Strukturelement a, b und c zueinander beschreiben. Der Index x steht für Werte von 0.05 - 0.3, der Index m' für Werten von 0.5 - 0.8, der Index p für Werte von 0.1 - 0.2 mit der Voraussetzung, dass die Summe von x, m' und p gleich 1 ist.

Bevorzugt ist $x < 0.26$, bevorzugt $< 0.20$.

Dem Fachmann ist klar, dass die in Formel (Ia) als vereinfachte Darstellungen zu verstehen sind. Somit können die Bausteine a, b und c jeweils zufällig, abwechselnd oder blockweise zueinander angeordnet sein. Insbesondere stellt somit Formel (Ia) nicht zwangsläufig ein Triblock-Copolymer dar.

Als besonders bevorzugte Butadien-Acrylnitril-Copolymere gelten Hycar® CTBN 1300X31, Hycar® CTBN 1300X8, Hycar® CTBN 1300X13 und Hycar® CTBN 1300X9 von Noveon.

Andererseits lassen sich Carboxylgruppen-terminierte Polymere auch durch Umsetzung von Hydroxyl-, Amin- oder Thiol-endständigen Polymeren mit Dicarbonsäuren, bzw. deren Anhydriden, erhalten. Die auf diesem Weg erhältlichen Carboxylgruppen-terminierten Polymere lassen sich durch die Strukturformel (Ib) darstellen.

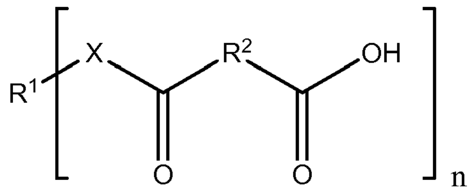

(Ib)

X steht hierbei für O, S oder $NR^4$, und $R^4$ steht für H oder eine Alkylgruppe mit 1 bis 10 Kohlenstoffatomen. $R^1$ steht für einen n-wertigen Rest eines Polymeren $R^1$-$[XH]_n$ nach dem Entfernen der endständigen -XH Gruppen. $R^2$ steht für einen Rest einer Dicarbonsäure nach Entfernung der zwei Carboxylgruppen, insbesondere eine gesättigte oder ungesättigte, gegebenenfalls substituierte Alkylengruppe mit 1 bis 6 Kohlenstoffatomen oder eine, gegebenenfalls substituierte, Phenylengruppe.

In einer zweiten Ausführungsform können zur Herstellung von Polymeren (A) Hydroxyphenyl-endständige Polymere eingesetzt werden, wie sie durch die Umsetzung von Hydroxyl-, Amin- oder Thiol-endständigen Polymeren mit Hydroxyphenyl-funktionellen Carbonsäuren oder deren Estern erhalten werden. Die auf diesem Weg erhältlichen Hydroxyphenyl-terminierten Polymere lassen sich durch die Strukturformel (II) darstellen.

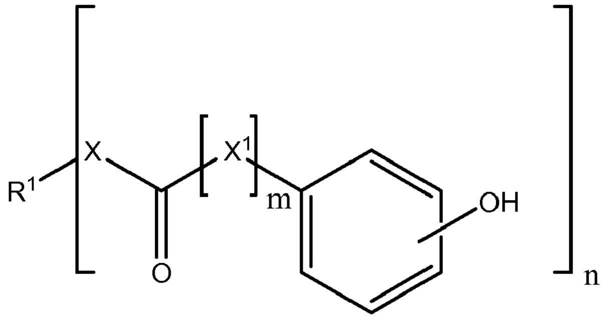
(II)

Dabei steht $X^1$ für $NR^4$, $CH_2$, oder $C_2H_4$ und m steht für 0 oder 1. $R^1$, X, $NR^4$ und n sind bereits vorgängig definiert worden.

Es versteht sich aber, dass die Herstellung des Polymers mit mindestens zwei Carboxyl- und/oder Phenolgruppen nicht auf diese oben aufgeführten Herstellwege beschränkt ist und der Fachmann jederzeit alternative Verfahren einsetzen kann.

Die Vorsilbe "poly", die in der vorliegenden Erfindung für Substanzbezeichnungen wie "Polyisocyanat" verwendet wird, weist im Allgemeinen darauf hin, dass die jeweilige Substanz formal mehr als eine der in ihrer Bezeichnung vorkommenden funktionellen Gruppe pro Molekül enthält.

Als "Phenolgruppen" werden im vorliegenden Dokument Hydroxylgruppen, welche unmittelbar an einen aromatischen Kern gebunden sind, verstanden, unabhängig davon, ob eine oder auch mehrere derartige Hydroxylgruppen direkt an den Kern gebunden sind.

In einer Ausführungsform wird das Polymer (A) durch Umsetzung von Carboxylgruppen-terminierten Polymeren mit einer Funktionalität von mindestens 2 mit aromatischen Glycidylethern gewonnen.

Bei der erfindungsgemäss verwendeten Glycidylgruppe handelt es sich vorzugsweise um Glycidylether, Glycidylester, Glycidylamin, Glycidylamid oder Glycidylimid.

Als "Glycidylether-Gruppe" wird hierbei die Gruppe der Formel

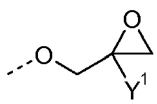

verstanden, wobei $Y^1$ für H oder Methyl steht.

Als "Glycidester-Gruppe" wird hierbei die Gruppe der Formel

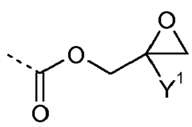

verstanden, wobei $Y^1$ für H oder Methyl steht.

Besonders bevorzugt ist die Verbindung mit mindestens einer Glycidylgruppe aus mono-, di- oder höherfunktionellen Glycidylethern oder Glycidylestern ausgewählt.

In einer Ausführungsform ist der Diglycidylether ein aliphatischer oder cycloaliphatischer Diglycidylether, insbesondere ein Diglycidylether von difunktionellen gesättigten oder ungesättigten, verzweigten oder unverzweigten, cyklischen oder offenkettigen $C_2$ - $C_{30}$ Alkoholen, z.B. Ethylenglykol-, Butandiol-, Hexandiol-, Octandioldiglycidylether, Cyclohexandimethanoldiglycidylether, Neopentylglycoldiglycidylether.

Beispielsweise ist der Diglycidylether ein aliphatischer oder cycloaliphatischer Diglycidylether, insbesondere

ein Diglycidylether der Formel (III) oder (IV)

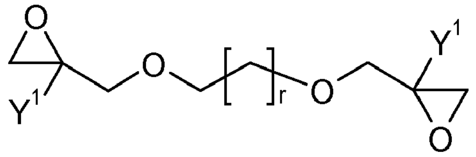

(III)

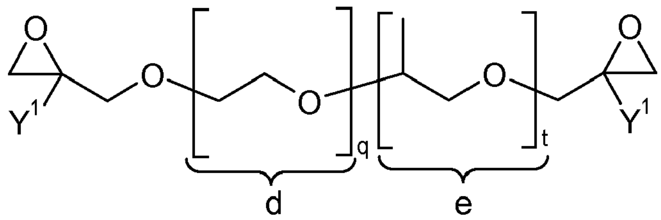

(IV)

Hierbei steht r für einen Wert von 1 bis 9, insbesondere für 3 oder 5. Zudem steht q für einen Wert von 0 bis 10 und t für einen Wert von 0 bis 10, mit der Massgabe, dass die Summe von q und t $\geq 1$ ist. Schliesslich stellt d das Strukturelement dar, welches von Ethylenoxid stammt, und e stellt das Strukturelement dar, welches von Propylenoxid stammt. Es handelt sich somit bei Formel (IV) um (Poly)ethylenglycoldiglycidylether, (Poly)propylenglycoldiglycidylether und (Poly)ethylenglycol/propylenglycol-diglycidylether, wobei die Bausteine d und e blockartig, abwechselnd oder zufällig angeordnet sein können.

Besonders geeignete aliphatische oder cycloaliphatische Diglycidylether sind Propylenglykoldiglycidylether, Butandioldiglycidylether oder Hexandioldiglycidyl-ether.

Besonders bevorzugte Beispiele für Glycidyether- und ester sind ausgewählt aus der Gruppe, die aus Neodecansäure-glycidylester, Benzoesäure-glycidylester, Phthalsäurediglycidyl-ester, Octyl-glycidylether, Decyl-glycidylether, Butandiol-diglycidylether, Hexandiol-diglycidylether, Cyclohexandimethynol-diglycidylether, Trimethylolpropan-triglycidylether, tert-Butylphenol-glycidylether, Kresyl-glycidylether, Cardanol-glycidylether (Cardanol = 3-Penta-decenylphenol (aus Cashewnuss-Schalen-Öl)), Diglycidylether von Bisphenolen, insbesondere Epoxid-Festharzen, Epoxid-Flüssigharzen, Bisphenol-F-diglycidylether (destilliert und undestilliert), Bisphenol-A-diglycidylether (destilliert und undestilliert), bevorzugt Bisphenol-A-diglycidylether (destilliert oder undestilliert) besteht.

Neben Glycidylethern oder Glycidylestern können erfindungsgemäss wie oben angesprochen auch Aminglycidylverbindungen eingesetzt werden. Als entsprechende Beispiele hierfür seien beispielsweise benannt:

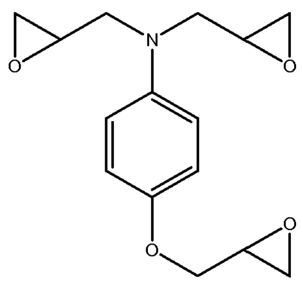

N,N-Diglycidyl-4-glycidoxyanilin

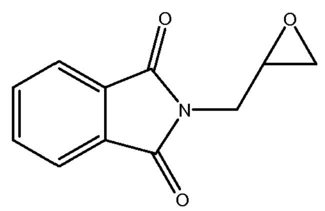

N-2,3-epoxypropyl-phthalimin

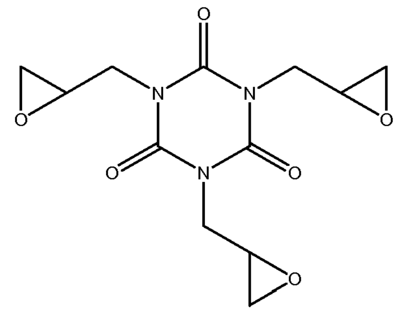

Tris(2,3-epoxypropyl)-isocyanurat

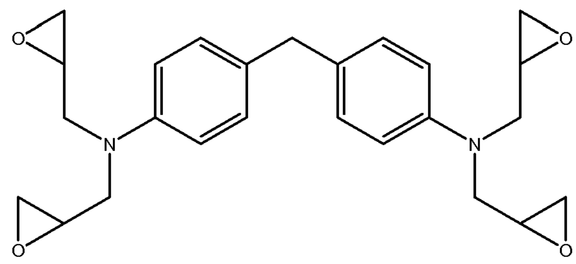

4,4'-Methylen-bis(N,N-diglycidylanilin)

In einer Ausführungsform wird das Polymer (A) durch Umsetzung von mindestens einem Carboxylgruppen-terminierten Polymeren der Formel (I), bevorzugt von mindestens einem Carboxylgruppen-terminierten Butadien-Acrylnitril-Copolymeren (CTBN), mit mindestens einem Glycidylether oder Glycidylester hergestellt. Die Umsetzung erfolgt dann unter Bildung des Polymeren der Formel (A-I) wie folgt:

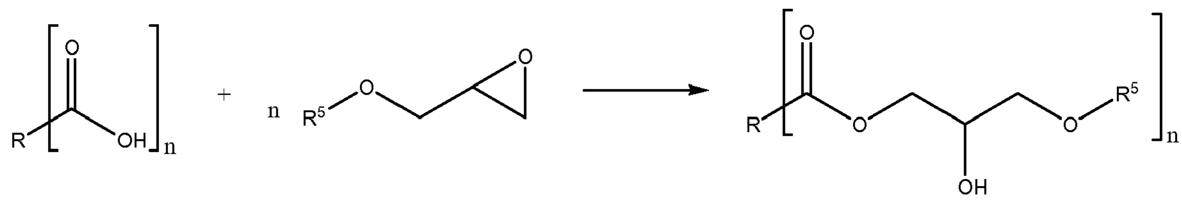

(I) (A-I)

$R^5$ steht hier für die Restgruppen der oben beschriebenen Glycidylether- oder Glycidylester-Verbindungen.
Einerseits bevorzugt wird hierfür als Polymer der Formel (I) ein Carboxylgruppen-terminiertes Butadien-Acrylnitril-Copolymer (CTBN) der Formel (Ia) eingesetzt, so dass als Polymer der Formel (A-I) ein Polymer der Formel (A-Ia) gebildet wird.

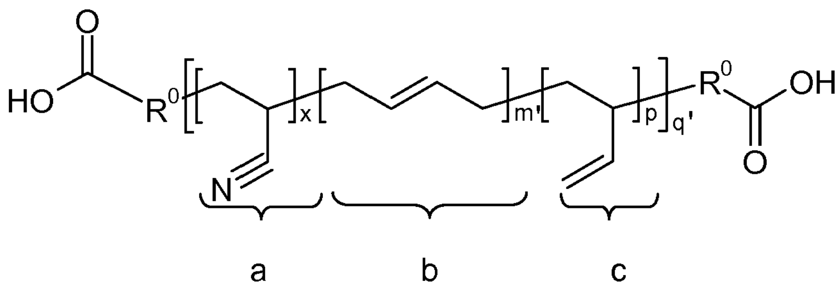

(Ia)

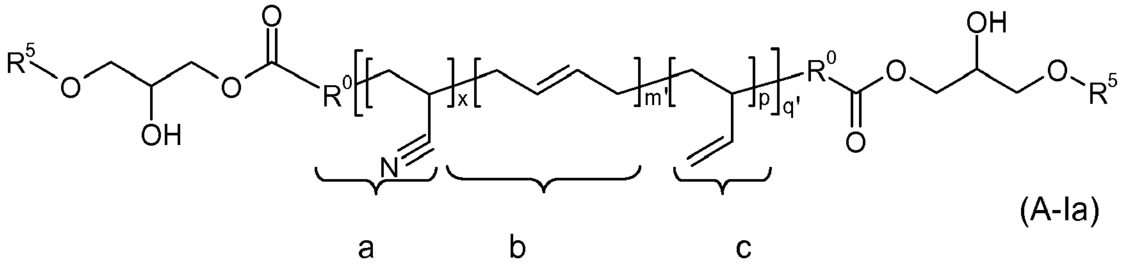

(A-Ia)

Anderseits bevorzugt wird als Polymer der Formel (I) ein Carboxylgruppen-terminiertes Polymer der Formel (Ib) eingesetzt, so dass als Polymer der Formel (A-I) ein Polymer der Formel (A-Ib) gebildet wird.

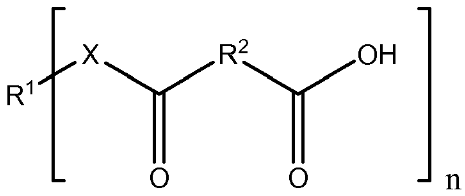

(Ib)

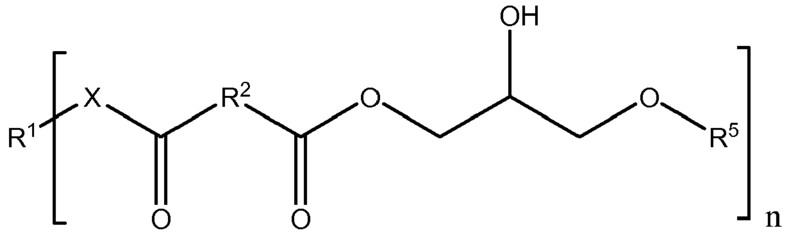

(A-Ib)

In einer weiteren Ausführungsform wird das Polymer (A) durch Umsetzung von mindestens einem Phenolgruppen aufweisenden Polymeren der Formel (II) mit mindestens einem Glycidylether oder Glycidylester hergestellt. Die Umsetzung erfolgt dann entsprechend unter Bildung des Polymeren der Formel (A-II)

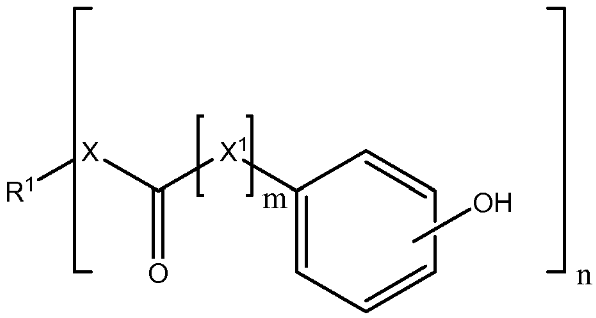

(II)

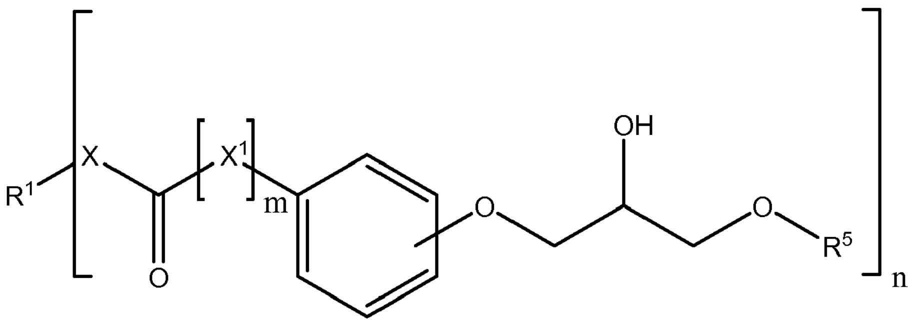

(A-II)

Vorzugswiese steht $R^1$ für ein Poly(oxyalkylen)polyol, Polyesterpolyol, Poly(oxyalkylen)polyamin, Polyalkylenpolyol, Polycarbonatpolyol Polymercaptan oder Polyhydroxypolyurethan nach Entfernung der Hydroxyl-, Amin- oder Mercaptangruppen.

In einer Ausführungsform ist $R^1$ ein Polyol. Derartige Polyole sind bevorzugt Diole oder Triole, insbesondere

- Polyoxyalkylenpolyole, auch Polyetherpolyole genannt, welche das Polymerisationsprodukt von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 300 - 20'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren enthalten werden.

In einer anderen Ausführungsform ist $R^1$ ein Polyamin. Derartige Polyamine sind insbesondere Diamine oder Triamine, bevorzugt aliphatische oder cycloaliphatische Diamine oder Triamine. Insbesondere sind dies Polyoxyalkylen-Polyamine mit zwei oder drei Aminogruppen, beispielsweise erhältlich unter dem Namen Jeffamine® (von Huntsman Chemicals), unter dem Namen Polyetheramin (von BASF) oder unter dem Namen PC Amine® (von Nitroil), sowie Mischungen der vorgenannten Polyamine.

Bevorzugte Diamine sind Polyoxyalkylen-Polyamine mit zwei Aminogruppen, insbesondere solche der Formel der Formel (V).

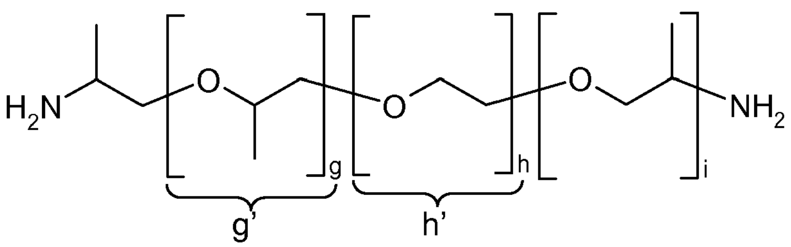

(V)

Hierbei stellen g' das Strukturelement, welches von Propylenoxid stammt, und h' das Strukturelement, welches von Ethylenoxid stammt, dar. Zudem stehen g, h und i je für Werte von 0 bis 40, mit der der Massgabe, dass die Summe von g, h und i ≥ 1 ist.

Insbesondere sind Molekulargewichte zwischen 200 und 10'000 g/mol bevorzugt.

Insbesondere bevorzugte Diamine sind Jeffamine®, wie sie unter der D-Linie und ED-Linie von Huntsman

Chemicals angeboten werden, wie zum Besipiel Jeffamine® D-230, Jeffamine® D-400, Jeffamine® D-2000, Jeffamine® D-4000, Jeffamine® ED-600, Jeffamine® ED-900 oder Jeffamine® ED-2003. Im Weiteren bevorzugte Triamine werden beispielsweise unter der Jeffamine® T-Line von Huntsman Chemicals vertrieben, wie beispielsweise Jeffamine® T-3000, Jeffamine® T-5000 oder Jeffamine® T-403.

In einer weiteren Ausführungsform ist $R^1$ ein Polymercaptan. Geeignete Polymercaptane sind beispielsweise Polymercaptocetate von Polyolen. Es handelt sich hierbei insbesondere um Polymercaptocetate der folgenden Polyolen:

- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 300 - 20'000 Dalton, Polyoxybutylendiole und -triole, Polyoxypropylendiole und - triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren enthalten werden.
  Insbesondere bevorzugt sind Glycol-dimercaptoacetat, Trimethylolpropantrimercaptoacetat und Butandiol-dimercaptoacetat.

Als meist bevorzugte Polymercaptane gelten Dimercaptane der Formel (VI).

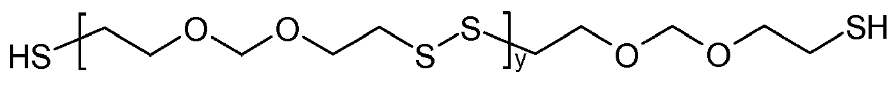

(VI)

Hierbei steht y für einen Wert von 1 bis 45, insbesondere von 5 bis 23. Die bevorzugten Molekulargewichte sind zwischen 800 und 7500 g/mol, insbesondere zwischen 1000 und 4000 g/mol.

Derartige Polymercaptane sind kommerziell erhältlich unter der Thiokol® LP-Reihe von Toray Fine Chemicals Co.

Gemäss einer weiteren Ausführungsform wird Polymer (A) durch Umsetzung von mindestens einem Glycidylether oder Glycidylester mit mindestens einem Phenolgruppen- oder Carboxylgruppen-terminierten Polymeren hergestellt, welche durch Umsetzung von mindestens einem hydroxyl-, amin- oder thiolfunktionellen Polymeren mit mindestens einer Hydroxyphenyl-funktionellen Carbonsäure oder deren Ester und mindestens einer Dicarbonsäure oder einem Dicarbonsäure-Anhydrid erhalten werden.

Bevorzugte Hydroxyphenyl-funktionelle Carbonsäureester sind ortho-, meta- oder para-Hydroxy-benzoesäuremethylester, ortho-, meta- oder para-Hydroxy-benzoesäure-ethylester, ortho-, meta- oder para-Hydroxy-benzoesäureisopropylester, Benzoxazolinon, Benzofuran-2-on, Benzodihydro-pyron.

Bevorzugte Dicarbonsäureanhydride sind Phthalsäureanhydrid, Maleinsäureanhydrid, Bernsteinsäureanhydrid, Methylbernsteinsäureanhydrid, Isobutenbernsteinsäureanhydrid, Phenylbernsteinsäure-anhydrid, Itaconsäure-anhydrid, cis-1,2,3,6-Tetrahydrophthalsäure-anhydrid, Hexahydrophthalsäure-anhydrid, Norbornan-2,3-dicarbonsäureanhydrid, Hexahydro-4-methylphthal-säureanhydrid, Glutarsäureanhydrid, 3-Methyl-Glutarsäureanhydrid, (±)-1,8,8-Trimethyl-3-oxabicyclo[3.2.1]octane-2,4-dione, Oxepan-2,7-dion.

Diese Umsetzung erfolgt vorzugsweise in Anwesenheit eines Katalysators bei erhöhten Temperaturen von 50°C bis 150°C, vorzugsweise 70°C bis 130°C.

Als Katalysator wird vorzugsweise Triphenylphosphin eingesetzt, die Reaktion kann wahlweise unter Schutzgas oder Vakuum erfolgen. Beispiele für weitere einsetzbare Katalysatoren sind tertiäre Amine, quaternäre Phosphoniumsalze oder quaternäre Ammoniumsalze.

Es kann aber für diese Umsetzung auch kein Katalysator eingesetzt, die Umsetzung erfolgt dann jedoch bei erhöhten Temperaturen von 80°C bis 200°C, vorzugsweise 90°C bis 180°C.

Vorzugsweise wird ein molarer Überschuss der Epoxidgruppen gegenüber den Carboxyl- und/oder Phenolgruppen im Reaktionsgemisch gewählt. Hierbei beträgt das Verhältnis der Anzahl Epoxidgruppen gegenüber der Anzahl Carboxyl- und/oder Phenolgruppen 1:1 bis 50:1, vorzugsweise 1:1 bis 20:1, besonders bevorzugt 1:1 bis 10:1.

Als Polyisocyanat (B) wird in einer bevorzugten Ausführungsform ein Diisocyanat oder ein Triisocyanat eingesetzt.

Als Polyisocyanate können aliphatische, cycloaliphatische oder aromatische Polyisocyanate, insbesondere Diisocyanate, verwendet werden.

Insbesondere geeignet sind die folgenden:

- 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder $H_6$TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder $H_{12}$MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin.
- 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI).
- Oligomere (z.B. Biurete, Isocyanurate) und Polymere der vorgenannten monomeren Diisocyanate.
- Beliebige Mischungen der vorgenannten Polyisocyanate.

Bevorzugt sind monomere Diisocyanate, insbesondere MDI, TDI, HDI und IPDI.

Das Polyisocyanat (B) wird insbesondere in einer derartigen Menge eingesetzt, dass das Verhältnis von NCO-Gruppen zu OH-Gruppen des beschriebenen Hydroxylgruppen aufweisenden Polymers (A) in einem Verhältnis > 1 bis 2 ist, so dass Isocyanatgruppen-endständige Polyadditionsprodukte entstehen. Insbesondere geeignet sind derartige Polyadditionsprodukte, welche aus einem Verhältnis NCO/OH-Verhältnis zwischen 1.5 und 2 entstehen.

Dem Fachmann ist klar, dass er die Menge an Polyisocyanat (B) entsprechend erhöhen sollte, wenn weitere NCO-reaktive Verbindungen, beispielsweise die unten beschriebenen Isocyanatreaktiven Polymere (C), bei dieser Umsetzung vorhanden sind.

Bei einer Variante des erfindungsgemässen Herstellungsverfahrens ist bei der Umsetzung des mindestens einen Polymers (A) mit mindestens einem Polyisocyanat (B) zusätzlich noch mindestens ein weiteres isocyanatreaktives Polymer (C) vorhanden. Dieses isocyanatreaktive Polymer (C) ist vorzugsweise ausgewählt aus der Gruppe bestehend aus Poly(oxyalkylen)polyol, Polyester-polyol, Polycarbonatpolyol, Poly(oxyalkylen)polyamin, Polyalkylenpolyol und Polymercaptan. Bezüglich Beispielen für diese Substanzgruppen sei auf die obigen Ausführungen zu $R^1$-$[XH]_n$ verwiesen.

Vorzugsweise liegen Polymer (A) und das (die) weiteren Polymere in einem Gewichts-Mischverhältnis von 1: 100 bis 100:1 vor.

Gemäss einem zweiten Aspekt betrifft die vorliegende Erfindung ein Isocyanatgruppen-endständiges Polyadditionsprodukt aus

i) einem Polymer (A) wie es vorgängig beschrieben wurde; und
ii) einem Polyisocyanat (B).

Das Isocyanatgruppen-endständige Polyadditionsprodukt der vorliegenden Erfindung ist weiterhin nach einem wie vorher definierten Verfahren gewinnbar.

Wie eingangs erwähnt ist das erfindungsgemässe Isocyanatgruppen-endständige Polyadditionsprodukt insbesondere in Klebstoffen verwendbar und insofern betrifft die vorliegende Erfindung eine Klebstoffzusammensetzung, die dieses enthält.

Aufgrund seiner speziellen Eigenschaften umfasst die vorliegende Erfindung die Verwendung des Polymers (A) in der Polyurethan-Chemie, vorzugsweise als Härterkomponente oder Teil einer Härterkomponente in Zweikomponenten-Klebstoffen. Daneben sind vielfältige andere Anwendungen denkbar, beispielsweise in PU für Dichtungen, Schläuchen, Fussböden, Lacke, Dichtstoffe, Skier, Textilfasern, Laufbahnen in Stadien, Vergussmassen, und vieles mehr.

**Beispiele**

Die folgenden Beispiele dienen lediglich zur Illustration der vorgängig im Detail beschrieben Erfindung und limitieren die Erfindung in keinster Weise.

<u>Herstellung von Polymeren mit mindestens zwei Hydroxylgruppen</u>

***A-1***

600g Hycar 1300X13 (Säurezahl ca. 32.0 mg KOH/g: 0.342 eq COOH), 89.5g Polypox R7 (t-Butylphenylglycidylether; EP-Gehalt ca. 4.40 eq/kg, 0.394 eq EP), 0.7g 2,6-Di-*tert.*butyl-p-kresol (Radikalfänger) und 1.4g Triphenylphosphin wurden unter Rühren und unter Stickstoff zusammengegeben und vermengt. Anschliessed wurde während 7h bei 120°C gerührt bis eine konstante Epoxid-Konzentration erreicht war (End-Epoxidgehalt: 0.07 eq/kg, theoretisch: 0.08 eq/kg). Es wurde schliesslich ein viskoses Polymer mit einer OH-Zahl von ca. 28.0 mg KOH/g erhalten.

***A-2***

150g Hycar 1300X13 (Säurezahl ca. 32.0 mg KOH/g: 0.086 eq COOH), 225g Epilox A 17-01 (destillierter Bisphenol-A-diglycidylether, EP-Gehalt ca. 5.75 eq/kg, 1.29 eq EP), 0.2g 2,6-Di-*tert.*butyl-p-kresol (Radikalfänger) und 0.5g Triphenylphosphin wurden unter Rühren und unter Stickstoff zusammengegeben und vermengt. Anschliessed wurde während 5h bei 120°C gerührt bis eine konstante Epoxid-Konzentration erreicht war (End-Epoxidgehalt: 3.23 eq/kg, theoretisch: 3.21 eq/kg). Es wurde schliesslich ein viskoses Polymer mit einer OH-Zahl von ca. 12.5 mg KOH/g erhalten.

Die mindestens zwei Hydroxylgruppen aufweisenden Polymere ***A-1*** und ***A-2*** wurden zur Herstellung von Isocyanatgruppen-aufweisenden Polyurethanprepolymeren, bzw. zur Herstellung von Polyurethanen, verwendet.

**Patentansprüche**

**1.** Verfahren zur Herstellung von Polyurethanen, umfassend die Schritte:

a) Bereitstellen von mindestens einem Polymer (A), welches mindestens zwei Hydroxylgruppen aufweist und welches durch die Umsetzung eines Polymers mit mindestens zwei Carboxyl- und/oder PhenolGruppen mit mindestens einer Verbindung mit mindestens einer Glycidylgruppe erhalten wird;
b) Umsetzen des mindestens einen Polymers (A) mit mindestens einem Polyisocyanat (B).

**2.** Verfahren nach Anspruch 1, **dadurch gekennzeichnet, dass** die Verbindung mit mindestens einer Glycidylgruppe ein Glycidylether, ein Glycidylester, ein Glycidylamin, ein Glycidylamid oder ein Glycidylimid ist.

**3.** Verfahren nach Anspruch 1 oder 2, wobei das Polymer (A) durch Umsetzung von Carboxylgruppen-terminierten Polymeren mit einer Funktionalität von mindestens 2 mit aromatischen Glycidylethern gewonnen wird.

**4.** Verfahren nach Anspruch 1 oder 2, wobei die Verbindung mit mindestens einer Glycidylgruppe aus mono- oder polyfunktionellen Glycidylethern oder Glycidylestern ausgewählt ist.

**5.** Verfahren nach Anspruch 4, bei dem der Glycidylether oder Glycidylester ein Glycidylether ist, welcher ausgewählt ist aus der Gruppe bestehend aus Neodecansäure-glycidylester, Benzoesäure-glycidylester, Phthalsäurediglycidylester, Octyl-glycidylether, Decyl-glycidylether, Butandioldiglycidylether, Hexandiol-diglycidylether, Cyclohexandimethynol-diglycidylether, Trimethylol-propan-triglycidylether, tert-Butylphenol-glycidylether, Kresyl-glycidylether, Cardanol-glycidylether (Cardanol = 3-Penta-decenyl-phenol), Diglycidylether von Bisphenolen, insbesondere Epoxid-Festharze, Epoxid-Flüssigharze, Bisphenol-F-diglycidylether (destilliert und undestilliert), Bisphenol-A-diglycidylether (destilliert und undestilliert), bevorzugt Bisphenol-A-diglycidylether (destilliert oder undestilliert).

**6.** Verfahren nach einem oder mehreren der vorhergehenden Ansprüche, wobei das Polymer (A) durch Umsetzung von mindestens einem Carboxylgruppen-terminierten Butadien-Acrylnitril-Copolymeren (CTBN) mit mindestens einem Glycidylether oder Glycidylester hergestellt wird.

**7.** Verfahren nach einem oder mehreren der vorhergehenden Ansprüche, wobei das Polymer (A) durch Umsetzung von mindestens einem Glycidylethern oder Glycidylestern mit mindestens einem Carboxylgruppen-terminierten Polymeren der Formel (I) hergestellt wird,

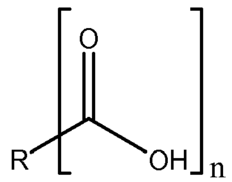 (I)

wobei

R für einen n-wertigen Rest eines Carboxylgruppen-terminierten Polymeren nach Entfernung von n Carboxyl-Gruppen steht;
und n für einen Wert von 2 bis 4 steht.

**8.** Verfahren nach einem oder mehreren der vorhergehenden Ansprüche, wobei das Polymer (A) durch Umsetzung von mindestens einem Glycidylethern oder Glycidylestern mit mindestens einem Carboxylgruppen-terminierten Polymeren der Formel (Ib) hergestellt wird,

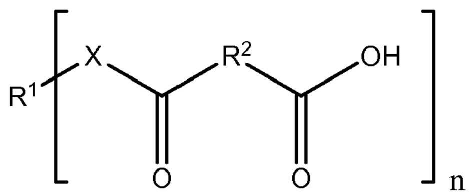 (Ib)

wobei

X für O, $NR^4$ oder S steht, wobei $R^4$ seinerseits für H oder eine Alkylgruppe mit 1 bis 10 Kohlenstoffatomen steht;
$R^1$ ein n-wertiger Rest eines Polymeren $R^1$-$[XH]_n$ nach Entfernung von n Gruppen XH ist;
$R^2$ ein Rest einer Dicarbonsäure nach Entfernung der zwei Carboxylgruppen ist, insbesondere eine gesättigte oder ungesättigte, gegebenenfalls substituierte Alkylengruppe mit 1 bis 6 Kohlenstoffatomen oder eine, gegebenenfalls substituierte, Phenylengruppe ist;
und n für einen Wert von 1.7 bis 4 steht.

**9.** Verfahren nach Anspruch 8, wobei $R^1$ für ein Poly(oxyalkylen)polyol, Polyesterpolyol, Poly(oxyalkylen)polyamin, Polyalkylenpolyol, Polycarbonatpolyol Polymercaptan oder Polyhydroxypolyurethan nach Entfernung der Hydroxyl-, Amin-, oder Mercaptangruppen steht.

**10.** Verfahren nach einem oder mehreren der vorhergehenden Ansprüche, wobei das Polymer (A) durch Umsetzung von mindestens einem Glycidylether oder Glycidylester mit mindestens einer Phenolgruppenterminierten Polymeren der Formel (II) hergestellt wird,

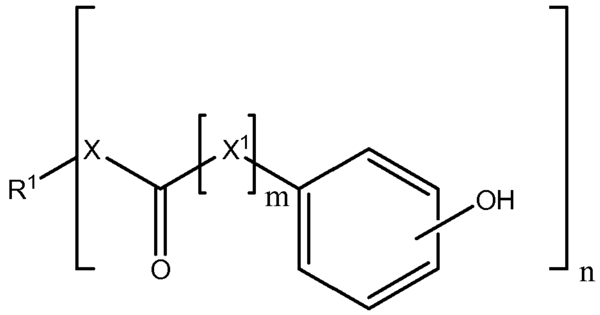

(II)

wobei X, n, $R^1$ und $R^4$ wie in Anspruch 8 definiert sind und $X^1$ für $NR^4$, $CH_2$ oder $C_2H_4$ steht und m = 0 oder 1 ist.

**11.** Verfahren nach einem oder mehreren der vorhergehenden Ansprüche, wobei das Polymer (A) durch Umsetzung von mindestens einem Glycidylether oder Glycidylester mit mindestens einem Phenolgruppen- oder Carboxylgruppen-terminierten Polymeren hergestellt wird, welche durch Umsetzung von mindestens einem hydroxyl-, amin- oder thiolfunktionellen Polymeren mit mindestens einer Hydroxyphenyl-funktionellen Carbonsäure oder deren Ester und mindestens einer Dicarbonsäure oder einem Dicarbonsäure-Anhydrid erhalten werden.

**12.** Verfahren nach einem oder mehreren der Ansprüche 6-11, wobei die Umsetzung in Anwesenheit eines Katalysators bei erhöhten Temperaturen von 50°C bis 150°C, vorzugsweise 70°C bis 130°C, erfolgt.

**13.** Verfahren nach Anspruch 12, wobei der Katalysator Triphenylphosphin ist.

**14.** Verfahren nach einem oder mehreren der Ansprüche 6-11, wobei die Umsetzung in Abwesenheit eines Katalysators bei erhöhten Temperaturen von 80°C bis 200°C, vorzugsweise 90°C bis 180°C, erfolgt.

**15.** Verfahren nach einem oder mehreren der vorhergehenden Ansprüche, bei dem ein molarer Überschuss der Epoxidgruppen gegenüber den Carboxyl- und/oder Phenolgruppen im Reaktionsgemisch gewählt wird.

**16.** Verfahren nach Anspruch 15, wobei das Verhältnis der Anzahl Epoxidgruppen gegenüber der Anzahl Carboxyl- und/oder Phenolgruppen 1:1 bis 50:1, vorzugsweise 1:1 bis 20:1, besonders bevorzugt 1:1 bis 10:1 beträgt.

**17.** Verfahren nach einem oder mehreren der vorhergehenden Ansprüche, wobei als Polyisocyanat (B) ein Diisocyanat oder ein Triisocyanat eingesetzt wird.

**18.** Verfahren nach einem oder mehreren der vorhergehenden Ansprüche, wobei für die Umsetzung des mindestens einen Polymers (A) mit mindestens einem Polyisocyanat (B) zusätzlich noch mindestens ein weiteres Isocyanatreaktives Polymer (C) vorhanden ist.

**19.** Verfahren nach Anspruch 18, wobei das Isocyanatreaktive Polymer (C) ausgewählt ist aus der Gruppe bestehend aus Poly(oxyalkylen)polyol, Polyesterpolyol, Polycarbonatpolyol, Poly(oxyalkylen)polyamin, Polyalkylenpolyol und Polymercaptan.

**20.** Verfahren nach Anspruch 18 oder 19, wobei Polymer (A) und das (die) weiteren Polymere (C) in einem Gewichts-Mischverhältnis von 1:100 bis 100:1 vorliegen.

**21.** Isocyanatgruppen-endständiges Polyadditionsprodukt aus

i) einem Polymer (A) wie es in einem Verfahren gemäss einem der Ansprüche 1 bis 20 definiert ist; und
ii) einem Polyisocyanat (B).

**22.** Isocyanatgruppen-endständiges Polyadditionsprodukt, das nach einem Verfahren gemäss einem oder mehreren

der Ansprüche 1-20 gewinnbar ist.

**23.** Klebstoff, der ein Isocyanatgruppen-endständiges Polyadditionsprodukt nach einem der Ansprüche 21 oder 22 enthält.

**24.** Verwendung eines, wie in den Ansprüchen 1-20 definierten, Polymers (A) in der Polyurethan-Chemie.

**25.** Verwendung eines Polymers (A) nach Anspruch 24 als Härterkomponente oder Teil einer Härterkomponente in Zweikomponenten-Klebstoffen.

**26.** Verwendung des Polymers (A), wie es in den Ansprüchen 1-20 definiert ist, in einem Verfahren zur Herstellung von Polyurethanen.

Europäisches Patentamt

# EUROPÄISCHER RECHERCHENBERICHT

Nummer der Anmeldung
EP 07 15 0049

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 536 753 A (GRACE W R LTD [US]) 1. Juni 1984 (1984-06-01) * Beispiel 11 * | 1-26 | INV. C08G18/69 C08G18/58 C08C19/36 C09J175/04 |
| X | US 4 695 605 A (GOEL ANIL B [US]) 22. September 1987 (1987-09-22) * Beispiel 3 * | 1-26 | |
| X | US 4 728 737 A (GOEL ANIL B [US]) 1. März 1988 (1988-03-01) * Beispiele 1,4 * | 1-26 | |
| X | US 4 578 424 A (GOEL ANIL B [US]) 25. März 1986 (1986-03-25) * Beispiele 1,4 * | 1-26 | |
| X | US 4 740 539 A (GOEL ANIL B [US]) 26. April 1988 (1988-04-26) * Beispiel 2 * | 1-26 | |
| X | EP 0 249 940 A (ASHLAND OIL INC [US]) 23. Dezember 1987 (1987-12-23) * Beispiel 2 * | 1-26 | RECHERCHIERTE SACHGEBIETE (IPC) |
| X | US 4 878 978 A (GOEL ANIL B [US] ET AL) 7. November 1989 (1989-11-07) * Beispiel 2 * | 1-26 | C08C C08G C09J |
| X | US 4 863 525 A (GOEL ANIL B [US] ET AL) 5. September 1989 (1989-09-05) * Beispiel 1 * | 1-26 | |
| X | DE 27 46 789 A1 (HITACHI CHEMICAL CO LTD) 3. Mai 1978 (1978-05-03) * Beispiele 17-19 * | 1-26 | |
| | -/-- | | |

Der vorliegende Recherchenbericht wurde für alle Patentansprüche erstellt

3

| Recherchenort | Abschlußdatum der Recherche | Prüfer |
|---|---|---|
| München | 4. April 2008 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 07 15 0049

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KLASEK A ET AL: "VULCANIZATION OF LIQUID CARBOXYL-TERMINATED RUBBER FILLED WITH LEATHER BUFFING DUST"<br>JOURNAL OF APPLIED POLYMER SCIENCE, JOHN WILEY AND SONS INC. NEW YORK, US,<br>Bd. 53, Nr. 6,<br>8. August 1994 (1994-08-08), Seiten 735-746, XP000462018<br>ISSN: 0021-8995<br>* Seite 736; Abbildung 1 *<br>----- | 1,2,<br>15-26 | |
| X | US 3 792 003 A (DUCHESNE G)<br>12. Februar 1974 (1974-02-12)<br>* Ansprüche 1,3 *<br>----- | 1,15-22,<br>24,26 | |
| X | EP 0 270 318 A (LORD CORP [US])<br>8. Juni 1988 (1988-06-08)<br>* Seite 20; Anspruch 5 *<br>----- | 24-26 | |
| X | DE 30 00 911 A1 (SUMITOMO CHEMICAL CO)<br>24. Juli 1980 (1980-07-24)<br>* Beispiel 1 *<br>----- | 24,26 | RECHERCHIERTE SACHGEBIETE (IPC) |

Der vorliegende Recherchenbericht wurde für alle Patentansprüche erstellt

3

| Recherchenort | Abschlußdatum der Recherche | Prüfer |
|---|---|---|
| München | 4. April 2008 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
&: Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 07 15 0049

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| FR 2536753 | A | 01-06-1984 | KEINE | | | |
| US 4695605 | A | 22-09-1987 | EP | 0263263 | A2 | 13-04-1988 |
| | | | JP | 1096277 | A | 14-04-1989 |
| US 4728737 | A | 01-03-1988 | KEINE | | | |
| US 4578424 | A | 25-03-1986 | CA | 1275529 | C | 23-10-1990 |
| | | | DE | 3682527 | D1 | 02-01-1992 |
| | | | DE | 199889 | T1 | 21-05-1987 |
| | | | EP | 0199889 | A2 | 05-11-1986 |
| | | | JP | 1754898 | C | 23-04-1993 |
| | | | JP | 4041708 | B | 09-07-1992 |
| | | | JP | 61254683 | A | 12-11-1986 |
| | | | JP | 1024877 | A | 26-01-1989 |
| US 4740539 | A | 26-04-1988 | KEINE | | | |
| EP 0249940 | A | 23-12-1987 | JP | 63010683 | A | 18-01-1988 |
| | | | US | 4762864 | A | 09-08-1988 |
| US 4878978 | A | 07-11-1989 | KEINE | | | |
| US 4863525 | A | 05-09-1989 | KEINE | | | |
| DE 2746789 | A1 | 03-05-1978 | KEINE | | | |
| US 3792003 | A | 12-02-1974 | CA | 975494 | A1 | 30-09-1975 |
| EP 0270318 | A | 08-06-1988 | AU | 594609 | B2 | 08-03-1990 |
| | | | AU | 8186187 | A | 02-06-1988 |
| | | | CA | 1329296 | C | 03-05-1994 |
| | | | DE | 3778320 | D1 | 21-05-1992 |
| | | | JP | 1896234 | C | 23-01-1995 |
| | | | JP | 6021146 | B | 23-03-1994 |
| | | | JP | 63142001 | A | 14-06-1988 |
| | | | US | 4769419 | A | 06-09-1988 |
| DE 3000911 | A1 | 24-07-1980 | AT | 376995 | B | 25-01-1985 |
| | | | AT | 12880 | A | 15-06-1984 |
| | | | CA | 1158393 | A1 | 06-12-1983 |
| | | | FR | 2446309 | A1 | 08-08-1980 |
| | | | IT | 1130862 | B | 18-06-1986 |
| | | | NL | 8000161 | A | 15-07-1980 |
| | | | US | 4294940 | A | 13-10-1981 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4444692 A
- US 3712916 A
- US 4489008 A
- US 3551472 A
- US 3699153 A